# EUROPEAN PATENT SPECIFICATION

(11) **EP 1 311 823 B1**
(45) Date of publication and mention of the grant of the patent: **14.12.2005**
(21) Application number: 01964289.1
(22) Date of filing: 21.08.2001
(51) Int. Cl.: G01N 13/00, B01D 5/00

(54) **STIRRER AND CONDENSER ASSEMBLY FOR VESSEL ARRAY AND METHOD OF USE**
AUFBAU VON RÜHRERN UND KONDENSATOREN FÜR BEHÄLTERMATRIZEN SOWIE VERFAHREN ZU DEREN VERWENDUNG
ENSEMBLE AGITATEUR ET CONDENSEUR POUR RESEAU DE CUVES ET METHODE D'UTILISATION

(30) Priority: 22.08.2000 US 226872 P
(43) Date of publication of application: 21.05.2003
(73) Proprietor: GLAXO GROUP LIMITED, Greenford, Middlesex UB6 0NN (GB)
(72) Inventor: Buckner, Charles, Amick, III GlaxoSmithKline, Research Triangle Park, NC 27709 (US)
(74) Representative: Rice, Jason Neale
(86) International application number: PCT/US2001/026134
(87) International publication number: WO 2002/016838

(56) References cited:
- EP-A- 0 501 665
- WO-A-95/23329
- WO-A-99/08767
- DE-A- 4 214 834
- DE-A- 19 810 833
- FR-A- 2 026 088
- US-A- 4 879 917
- US-A- 5 398 806
- US-A- 6 019 168

## Description

### Technical Field

The present invention is generally directed to the preparation of sample solutions in vessels. Specifically, the present invention is directed to the stirring of such solutions and the prevention of loss of heated quantities of solution from such vessels through evaporation.

### Background Art

As part of many drug development processes, an array of test tubes or other such vessels are commonly placed in a heater unit generally consisting of a block of metal with rows and columns of holes to receive the test tubes. The heater unit is often provided as one of many modules integrated in a workstation, wherein each module performs a specific function dictated by the particular development process.

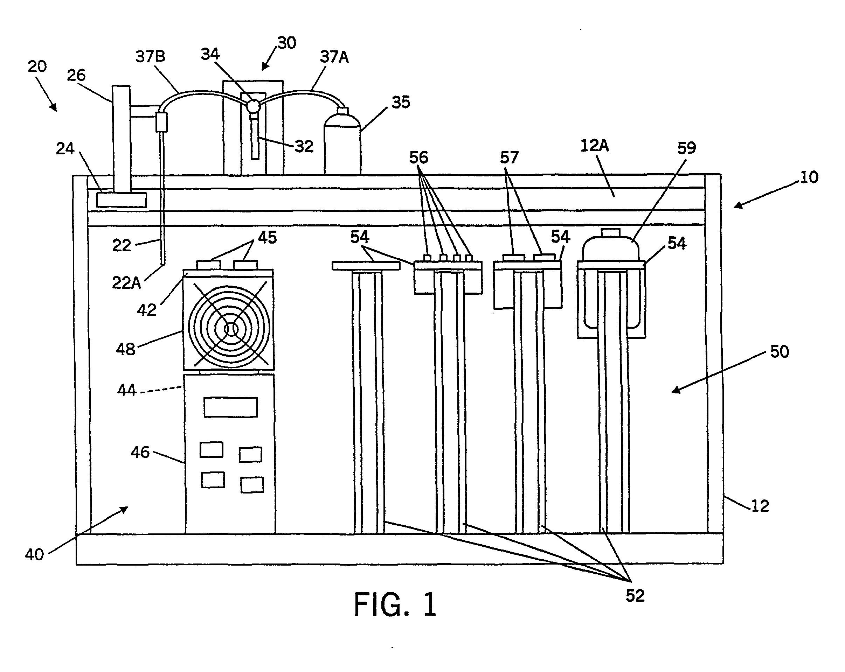

As an example, Figure 1 illustrates a conventional liquid sample preparation workstation generally designated **10.** Examples of such workstations are known from EP 0 501 665 A, US 4 879 917 A and WO 95/23329 A. Workstation **10** typically includes a frame **12,** a motor-driven robotic liquid handling module generally designated **20** equipped with a sampling needle **22,** a dilution module generally designated **30,** a heater unit generally designated **40,** and a vessel rack assembly generally designated **50.** Liquid handling module **20** includes a horizontal arm **24** movable along a lateral track **12A** in frame **12** and a vertical arm **26** movable along a lateral track (not shown) in horizontal arm **24.** Sampling needle **22** is mounted in a vertical track (not shown) of vertical arm **26.** Stepper motors (not shown) are typically provided to power the movement of each relevant component of liquid handling module **20** along its associated track. As a result, sampling needle **22** is movable along three axes to perform operations at various locations of workstation **10.**

Dilution module **30** is of the syringe pump type, and hence includes a syringe **32** and a valve **34.** Dilution module **30** operates to transfer a diluting medium such as solvent from a solvent reservoir **35** over transfer lines **37A** and **37B** to sampling needle **22.** Heater unit **40** includes a rack portion **42** and a lower enclosed portion **44** located behind the front of heater unit **40.** Rack portion **42** is essentially a heat conductive metal plate with an array of wells adapted to support heater vessels **45,** such that heater vessels **45** extend into enclosed portion **44** and are heated by a heating device contained therein. Enclosed portion **44** can also contain magnetic drives situated under each well. When activated, the magnetic drives couple with individual magnetic agitation elements dropped into each heater vessel **44** to stir the media contained in heater vessels **44.**

Heater vessels **45** are used to contain masses of sample drugs, chemicals, compounds and the like. A heater control device **46** is mounted in front of enclosed portion **44** to enable programming of the heating profile for the quantities of sample solutions contained in heater vessels **45,** and also to activate the magnetic drives. Vessel rack assembly **50** includes a number of rack mounts **52** for supporting vessel racks **54** of various types. Vessel racks **54** are in turn provided to accommodate arrays of vessels of various sizes and design, such as test tubes **56** and **57** and bottles **59.**

In one general application of workstation **10,** liquid handling module **20** moves into a position over heater unit **40,** and sampling needle **22** is lowered such that its tip **22A** pierces the septum of each heater vessel **45** to dispense a metered quantity of solvent therein. Once the diluted liquid samples are heated to a desired temperature, sampling needle **22** withdraws quantities of the samples from one or more of heater vessels **45** and moves to vessel rack assembly **50.** Sampling needle **22** can then be used to dispense metered quantities of samples into vessels **56, 57,** and/or **59** at vessel racks **54.** At this point, a number of operations can occur at rack assembly **50** that will depend on the specific sample preparation and testing procedure being conducted. As one example, samples could be transferred from rack assembly **50** for further processing by analytical equipment such as a high-pressure liquid chromatography apparatus.

As acknowledged by those skilled in the art, evaporation of the substances contained in heater vessels **45,** especially the solvent, is a recurring problem. Solvent evaporation can result in an undesirable change in the concentration of the chemical constituents in each heater vessel **45,** thereby impairing the validity of the sampling and analytical processes. Accordingly, heater unit **40** has been conventionally equipped with a fan unit **48,** which blows air around the top portions of heater vessels **45** to condense evaporated fluids and particularly the solvent. In this manner, fan unit **48** endeavors to prevent such vapors from escaping heater vessels **45** and causes the vapors to condense onto the walls of heater vessels **45,** such that the condensate returns to the bottom portions of heater vessels **45.**

This conventional method of blowing room air by the top portions of heater vessels **45,** although quite simple to implement, has proven to be quite ineffective. With the use of fan unit **48,** heat is transferred from the top portions of heater vessels **45** primarily by the mechanism of forced convection. As a general matter, convection occurs when a fluid such as air flows over a solid body or inside a channel while the temperatures of the fluid and the solid surface are different. Heat transfer between the fluid and the solid surface takes place as a consequence of the motion of the fluid relative to the surface. Without fan unit **48,** natural (or free) convective fluid motion would occur as a result of buoyancy forces induced by density gradients in the fluid, which density gradients are the result of temperature gradients directed from the solid surface into the fluid and temperature variations within the fluid itself. Fan unit **48** operates to mechanically induce the fluid motion, which in this case involves forcing the flow of ambient air around the outer surfaces of the top portions of heater vessels **45.**

It is well known that forced convection such as by a fan or pump significantly increases the rate of heat transfer as compared with natural convection. However, while the forced convection mode of heat transfer can be quite adequate in other contexts, it is inadequate when applied to an array of vessels such as heater vessels **45.** The amount of heat energy added to heater vessels **45** by heater unit **40** and the rate at which such heat energy is added can cause a relatively large quantity of solvent to quickly change into its vaporous phase, such that the forced convection of room air around the top portions of heater vessels **45** does not remove enough heat energy from the top portions to cause the solvent to condense back into liquid phase. As a result, much of the high-temperature evaporated solvent escapes heater vessels **45,** even when septa or other sealing components are provided, due to the temperature and pressure differentials between the interiors of heater vessels **45** and the ambient airspace.

Another problem stems from the fact that viscous compounds are often processed in heater vessels **45.** It is often required that such compounds be stirred, either constantly or periodically, while being heated. The compounds in heater vessels **45** are often too viscous to be stirred by conventional methods such as by using magnetically driven agitating elements. The problem is exacerbated by the relatively narrow interiors of heater vessels **45** and their close proximity to each other in the vessel array. There is little room around heater vessels **45** for mounting the external magnetic drive assemblies required in the use of magnetic agitation elements. Additionally, there is little room within each individual heater vessel **45** for inserting a paddle or other mechanically driven agitating element in a manner that does not interfere with other components operating within heater vessel **45** such as a sampling cannula.

The present invention is provided to solve these and other problems associated with the processing of substances within vessels.

### Disclosure of the Invention

The geometry of the condenser unit is such that a variety of surfaces are present within the top portion of the vessel for enabling heat transfer therefrom. In addition, a conduit for the heat transfer fluid is formed as a multi-pass flow arrangement which, in conjunction with the compactness of the condenser unit, increases the overall effectiveness of the condenser unit as a heat exchanger. A large amount of heat energy is carried away from the vessel by circulating a heat transfer fluid such as water through the condenser unit This circulation keeps the body and surfaces of the condenser unit quite cool, which in turn sets up a variety of complex temperature gradients along several directions from the localized air and solvent vapor in the top portion of the vessel towards the heat transfer fluid circulating within the condenser unit. Significant convective heat transfer occurs at the surfaces of the condenser unit, at the fluid conduit, as well as at the ambient surface of the top portion of the vessel. Significant conductive heat transfer occurs through the body of the condenser unit, as well as across the wall of the vessel.

The present invention also generally provides a stirring unit having a configuration which permits the stirring unit to operate constantly within the vessel without detrimentally affecting other procedures being carried out at the vessel. For instance, the stirring unit can operate at the same time a sampling needle is being employed to dispense or withdraw solvent or sample solution to or from the vessel. The stirring unit includes a mechanically driven paddle which provides sufficient power to stir highly viscous liquids, and it more closely mimics the process used as sample products are "scaled up" as understood by those skilled in the art of pharmaceutical development.

The respective designs of the condenser unit and stirring unit permit each unit to operate together and concurrently within the same vessel. This unique functional combination of paddle stirring and fluid-cooled condensing within the vessel, or within each vessel of a given vessel array, provides a highly useful and effective tool for pharmaceutical development.

According to the present invention there is provided a sample preparation workstation according to claim 1 hereof. Preferably, the inlet and outlet ends are each disposed proximate to the respective first ends of the inner tube and the outer sleeve.

The present invention also provides a method for preventing the escape of vaporous phases of a substance from a container according to claim 23 hereof.

### Brief Description of the Drawings

Figure 1 is a front elevation view of a conventional sample preparation workstation;
Figure 2 is a perspective view of a condenser unit according to the present invention;
Figure 2A is a perspective view of the condenser unit illustrated in Figure 2 with the addition of cooling fins;
Figure 3 is an exploded view of the condenser unit of Figure 2;
Figure 4 is a detailed perspective view of a portion of the condenser unit of Figure 2;
Figure 5 is a perspective view of a condenser assembly according to the present invention;
Figure 6 is a diagram of a heat transfer fluid circulation system according to the present invention;
Figure 7 is a perspective view of a stirring unit according to the present invention;
Figure 8 is an exploded view of a stirring assembly according to the present invention;
Figure 9 is a perspective view of the stirring assembly of Figure 8 in assembled form;
Figure 10 is a perspective view of a combined stirring and condensing assembly according to the present invention;
Figure 11 is another perspective view of the combined stirring and condensing assembly of Figure 10;
Figure 12 is a perspective view of the combined stirring and condensing assembly of Figure 10 installed at a sample preparation workstation in accordance with the present invention; and
Figure 13 is a perspective view of an alternative embodiment of the combined stirring and condensing assembly of Figure 10.

### Detailed Description of the Invention

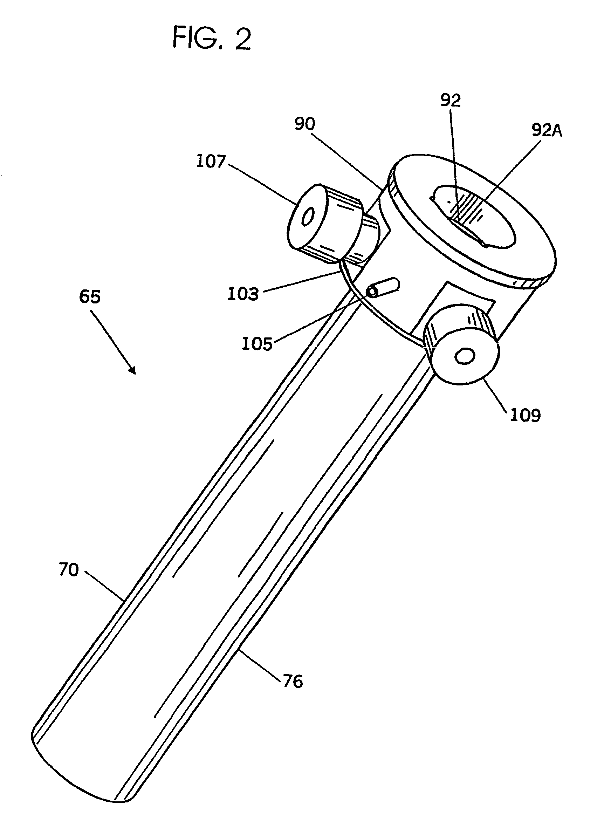

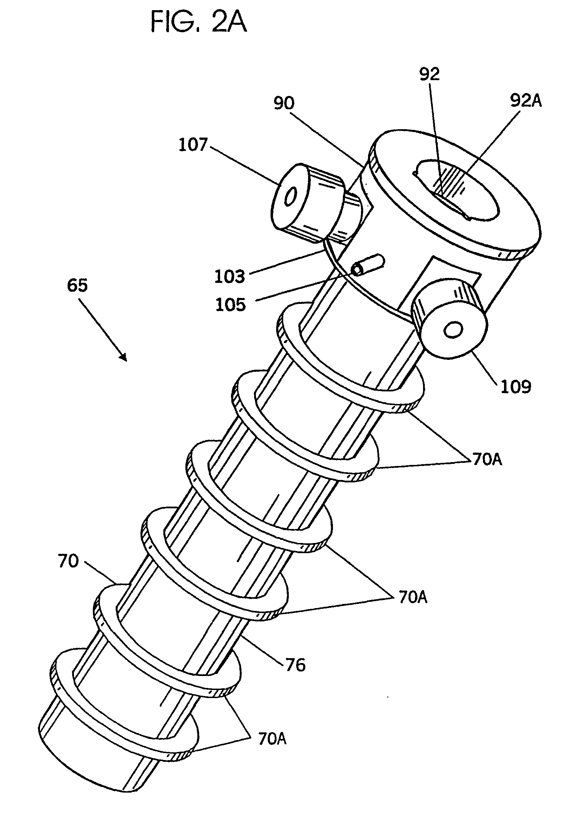

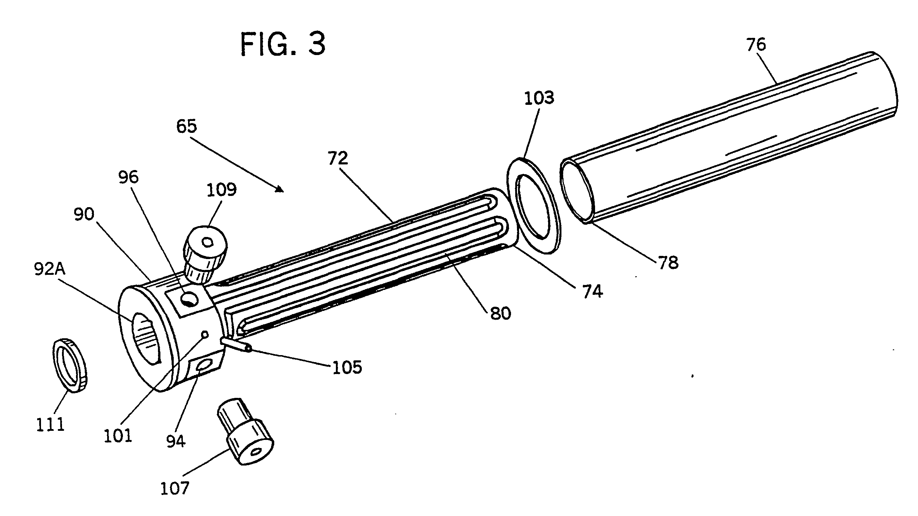

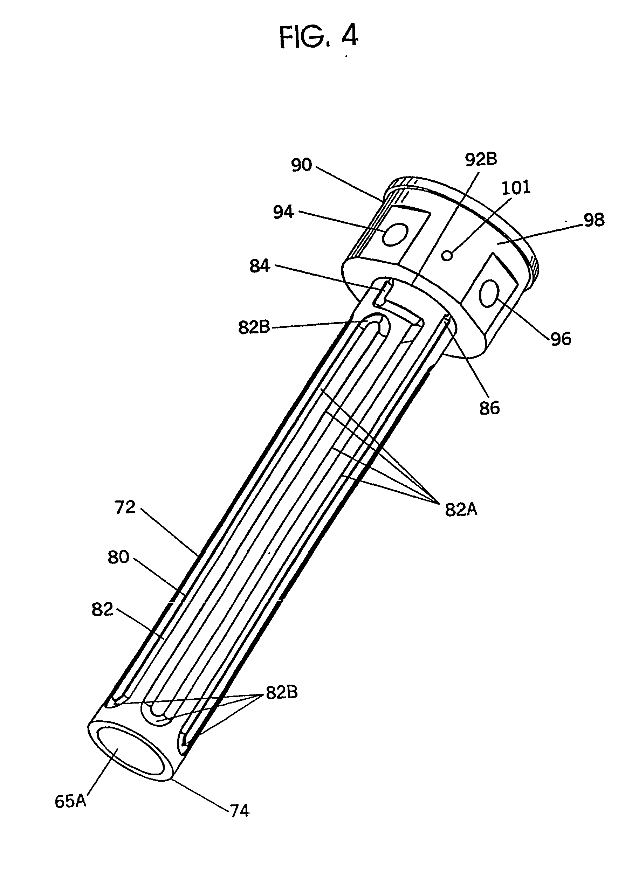

Referring to Figures 2-4, a condenser unit generally designated **65** is provided in accordance with one aspect of the present invention. As shown in Figure 2, condenser unit **65** includes a condenser body **70** and a mounting head **90,** each preferably constructed from a good heat conducting material such as steel. As shown in Figure 3, condenser body **70** includes an inner tube **72** and a coaxial outer sleeve **76.** Structurally, inner tube **72** has an inner wall **74** and outer sleeve **76** has an outer wall **78.** Referring to Figure 4, inner wall **74** defines a hollow interior **65A** for condenser body **65.**

A heat exchange conduit **80** for circulating a heat exchange fluid throughout condenser body **70** (thus serving as a condenser coil) is generally interposed between inner tube **72** and outer sleeve **76.** In the preferred embodiment best shown in Figure 4, heat exchange conduit **80** takes the form of a continuous groove **82** machined into inner wall **74** such that groove **82** and outer wall **78** (see Figure 3) cooperatively define heat exchange conduit **80.** In order to optimize the effectiveness of condenser body **70** as a heat transfer device, the length of groove **82** is maximized. Engineering within the context of the preferred cylindrical structures illustrated, this optimization is implemented by running groove **82** along an alternating serpentine course, such that groove **82** has many axial sections **82A** running along the height of condenser body **70** and many transitional sections **82B** running generally along circumferential sections of condenser body **70.** It can thus be seen that conduit **80** constitutes a multi-pass flow arrangement which increases the overall effectiveness of condensing unit **65** as a heat exchange device.

As best shown in Figure 4, heat exchange conduit **80** begins at an inlet end **84** and terminates at an outlet end **86.** Preferably, both inlet and outlet ends **84** and **86** are located near the top of condenser unit **65,** e.g., near mounting head **90,** so that external fluid lines do not need to be extended down into the vessel in which condenser unit **65** is to operate.

Referring back to Figure 2, mounting head **90** has a central bore **92** extending through its axial dimension from a top aperture **92A** to a bottom aperture **92B** (see Figure 4). Inlet and outlet apertures **94** and **96** are formed on an outside lateral surface **98** of mounting head **90.** Inlet and outlet apertures **94** and **96** are respectively connected in fluid communication with inlet and outlet ends **84** and **86** of heat exchange conduit **80** via internal passages (not shown) within mounting head **90.** A vent hole **101** extends radially from outside lateral surface **98** to bore **92.** As shown in Figure 4, inner tube **72** is secured to mounting head **90** at bottom aperture **92B** such as by press fitting or micro-welding.

Referring to Figure 3, condenser unit **65** is assembled by sliding a seal ring **103** over inner tube **72** until seal ring **103** abuts the underside of mounting head **90,** and by sliding outer sleeve **76** over inner tube **72.** Seal ring **103** is preferably a TEFLON® washer, and serves as a seal for the mouth of a test tube or other vessel into which condenser body **70** is to be inserted. The adjacent ends of inner tube **72** and outer sleeve **76** are micro-welded to ensure that no leaks occur. Using conventional methods, a vent tube **105** is secured at or into vent hole **101,** an inlet fitting **107** is secured at or into inlet aperture **94,** an outlet fitting **109** is secured at or into outlet aperture **96,** and a rotating seal **111** is placed into top aperture **92A** of mounting head **90** and situated above vent hole **101.** Fittings **107** and **109** and apertures **94** and **96** could be provided, for example, with mating threads for fastening purposes. Figure 2 illustrates condenser unit **65** in assembled form. Condenser unit **65** is quite compact and, for example, has been successfully installed in a test tube having a main outside diameter of 1 inch which tapers down to 0.7 inch near the top.

In the preferred embodiment, outer sleeve **76** is tightly fit around inner tube **72** in order that heat exchange conduit **80** is tightly sealed. As an alternative, outer sleeve **76** could be radially spaced from inner tube **72** to define an annular chamber (not shown) within which heat exchange conduit **80** could take the form of a small diameter tube running along a serpentine or helical course.

It is also preferred that heat exchange conduit **80** be singular and continuous. A plurality of heat exchange conduits **80** could be provided for each condenser unit **65,** but such an alternative would require additional inlet and outlet fittings **107** and **109** and hence additional complexity.

It can thus be seen that condenser unit **65** can be considered an indirect (or surface) contact-type heat exchanger with multi-pass flow capability.

Referring to Figure 2A, condenser unit **65** can alternatively be equipped with a set of annular cooling fins **70A** disposed around the periphery of condenser body **70.** Cooling fins **70A** can be provided as separate components attached to condenser body **70,** or can be formed by reducing the diameter of several sections of condenser body **70.** The addition of cooling fins **70A** can result in improved heat transfer characteristics by increasing the overall surface area available for heat transfer, influencing the direction of fluid flow around condenser body **70,** and/or promoting turbulence. As understood by those skilled in the art, the geometry, size and spacing of cooling fins **70A** must be selected so as to optimize fin efficiency and possibly counteract any resulting increase in thermal or flow resistance.

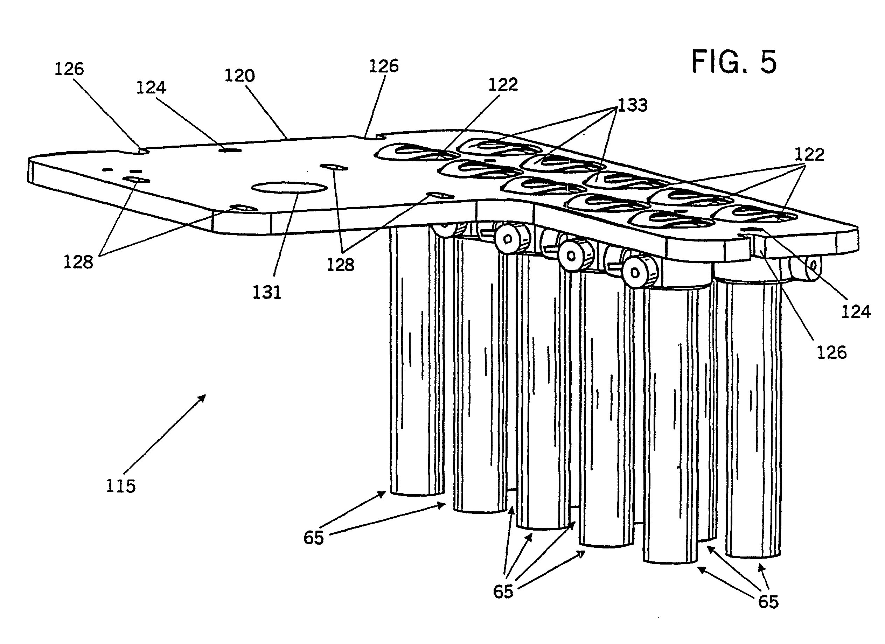

Referring to Figure 5, a condenser assembly generally designated **115** can be constructed by providing a seal plate **120** to serve as an overhead support for one or more condenser units **65.** In the illustrated example, seal plate **120** supports a 2 x 5 array of ten condenser units **65.** Seal plate **120** preferably includes apertures **122** aligned with each mounting head bore **92** (see Figure 2) as well as seal plate mounting holes **124** and recesses **126.** As described in more detail below, seal plate **120** can include motor mounting holes **128,** a motor output bore **131,** and a plurality of biasing members such as disk springs **133** extending into each seal plate aperture **122.** In one example, each condenser unit **65** is supported in its corresponding seal plate aperture **122** by an annular ledge or shoulder (not shown) of seal plate aperture **122** or by a second aperture (not shown) of smaller diameter.

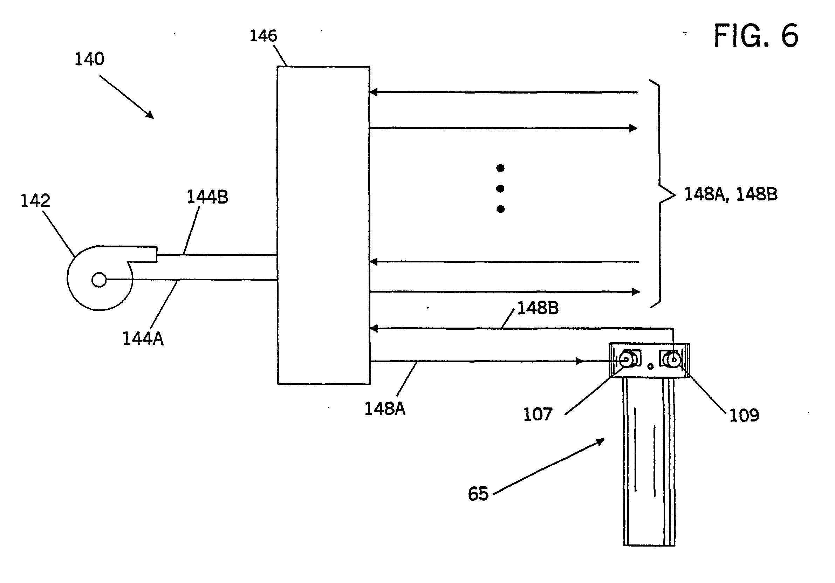

Referring to Figure 6, a heat transfer fluid circulation system generally designated **140** can be assembled for use in conjunction with one or more condenser units **65.** A suitable fluid pump **142** is provided to transfer a fluid heat transfer medium such as water from a source (not shown) over a pair of input and output lines **144A** and **144B** to and from condenser unit **65.** In the case where several condenser units **65** are employed, an accommodation such as a manifold **146** equipped with valves and directional passages as appropriate can interface with individual pairs of input and output lines **148A** and **148B** associated with each condenser unit **65.**

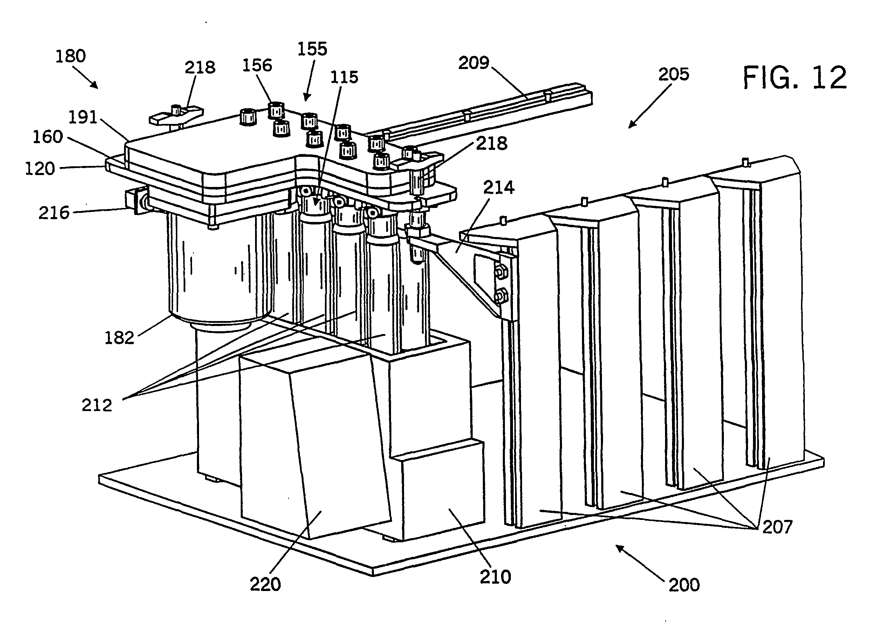

Referring to Figure 12, the present invention provides a novel sample preparation workstation generally designated **200.** Workstation **200** includes a vessel rack assembly generally designated **205** having a framework that includes front rack support members **207** and a rear rack support member **209.** Many of the modules typically utilized in conjunction with liquid handling and/or sample preparation equipment, such as those illustrated in Figure 1, can be integrated with workstation **200** as appropriate for the procedures contemplated by the user. A heater unit **210** is thus provided to heat an array of heater vessels **212.** A fan unit (e.g., fan unit **40** in Figure 1), however, is not required. Instead, improved heat exchanging capability is provided in the form of above-described condenser assembly **115.** Accordingly, condenser assembly **115** can be removably mounted to workstation **200** and positioned over heater unit **210** in accordance with the present invention, using suitable mounting components such as mounting brackets **214** and **216** and mounting pins **218** inserted through seal plate mounting holes **122** (see Figure 5). Seal plate recesses **126** could be utilized to receive removable components (not shown) for transporting condenser assembly **115** to workstation **200** and/or aligning condenser assembly **115** over heater unit **210,** or could be used to mount condenser assembly **115** to another location of workstation **200** (such as vessel rack assembly **205)** when condenser assembly **115** is in a non-operative standby mode.

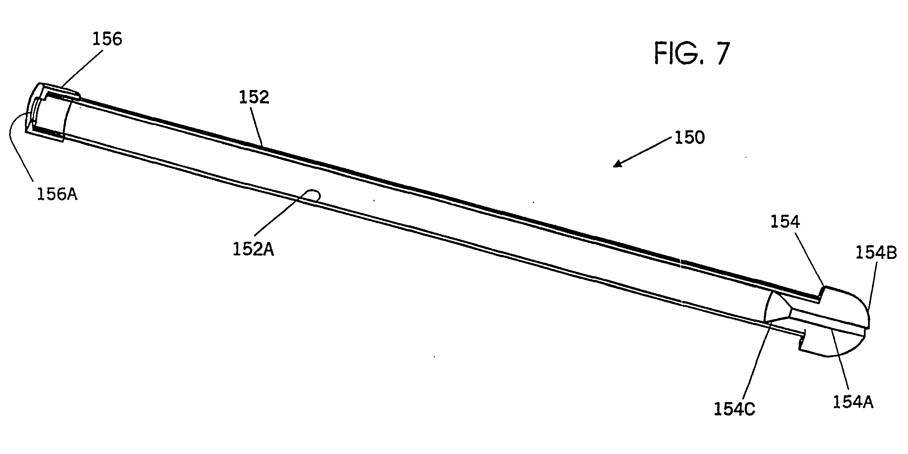

Referring to Figures 7 - 9, a stirring unit in the form of a stir rod generally designated **150** is also provided in accordance with the present invention. Stir rod **150** preferably includes a shaft **152** and an agitator element such as a paddle **154** removably mounted to shaft **152** such as by mated threads. The top of shaft **150** is threaded to receive a plastic cap **156** equipped with a septum **156A.** As shown in Figure 7, in order to permit an instrument (e.g., sampling needle **22** in Figure 1, a fiber optic probe, or the like) to pass through stir rod **150** into a vessel in which stir rod **150** is to operate, shaft **152** has a bore **152A** running along its length, and paddle **154** likewise has a bore **154A** extending to its paddle tip **154B.** In order to assist the sampling needle in traversing the length of stir rod **150,** especially where a robotic liquid handling module (e.g., liquid handling module **20** in Figure 1) is employed, paddle **154** includes a tapered conic section **154C** at the interface between paddle bore **154A** and shaft bore **152A.**

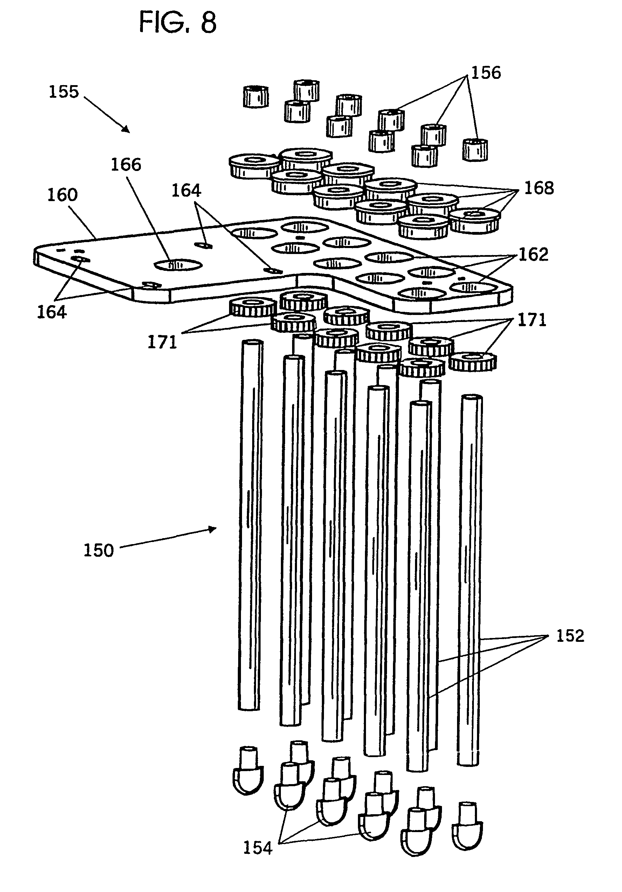

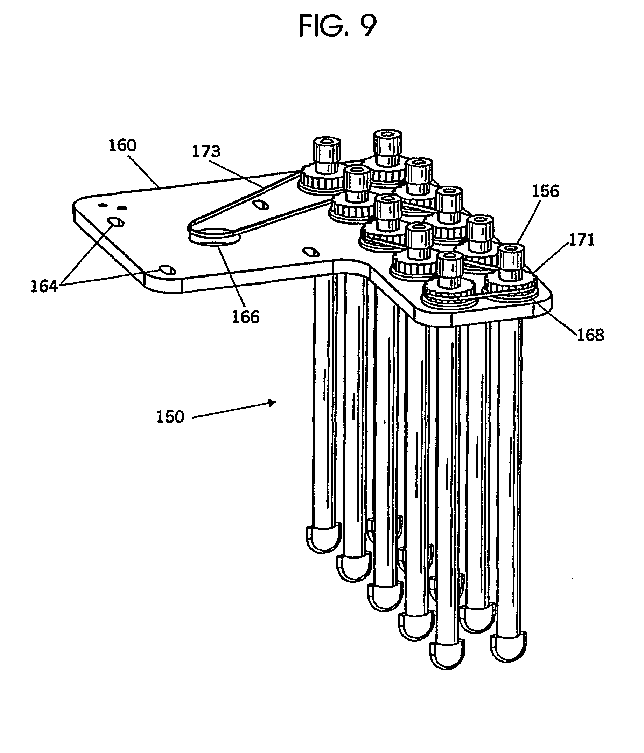

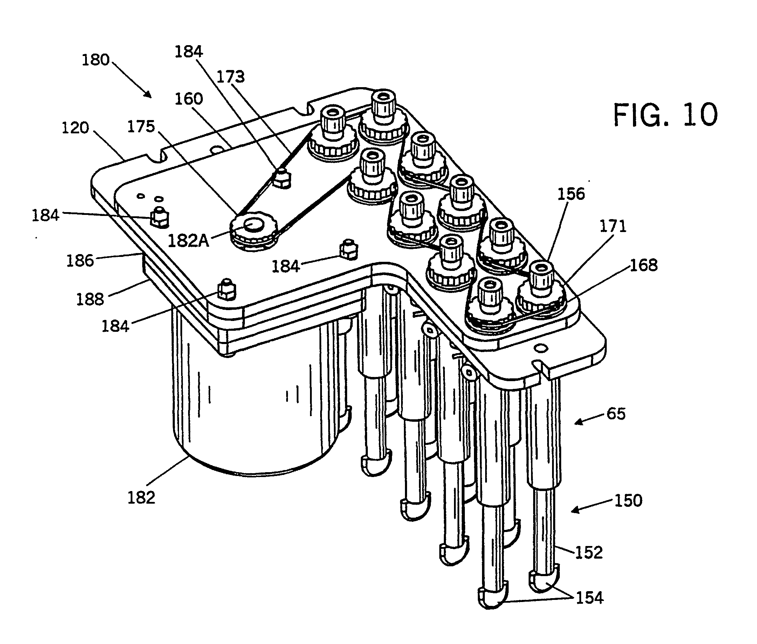

Referring to Figures 8 and 9, a stirring assembly generally designated **155** can be constructed by providing a bearing plate **160** and associated bearing and drive components, all of which are adapted to accommodate one or more stir rods **150.** In the illustrated example, bearing plate **160** supports a 2 x 5 array of ten stir rods **150.** For this purpose, bearing plate **160** preferably includes apertures **162** through which each corresponding stir rod **150** rotatably extends. Bearing plate **160** can also include motor mounting holes **164** and a motor output bore **166.** A roller bearing **168** is disposed in each bearing plate aperture **162** to rotatably support each corresponding stir rod **150.** Additionally, a stir rod drive gear **171** is fitted onto each stir rod **150.** An endless, flexible drive member such as a polymeric drive chain **173** with double-sided teeth (not specifically shown) is wrapped around drive gears **171** and a motor output gear **175** (see Figure 10) to provide positive drive capability. If desired, stirring assembly **155** could be operatively mounted to workstation **200** in Figure 12 apart from condenser assembly **115** to perform agitation procedures.

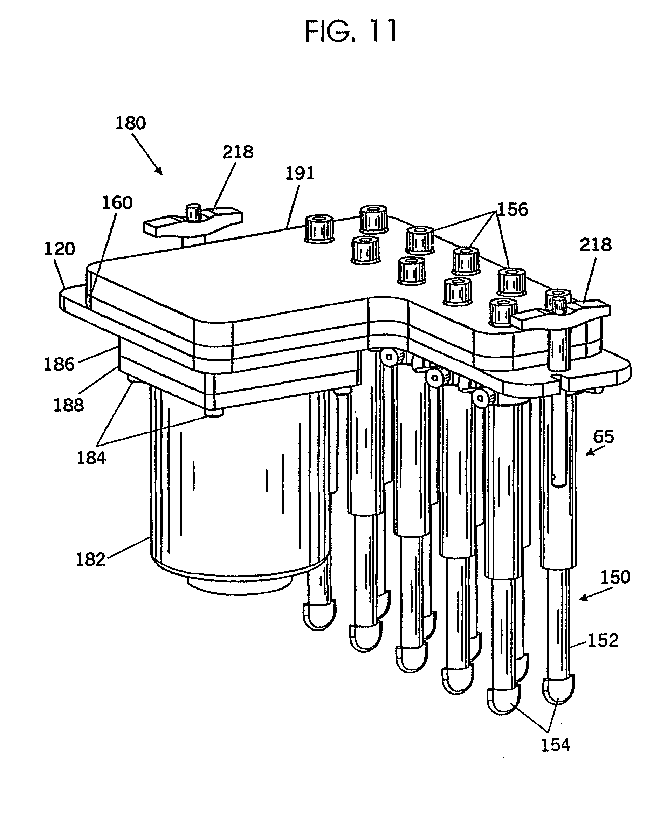

Referring to Figures 10 and 11, a preferred embodiment of the present invention combines condenser and stirrer assemblies **115** and **155** into an integrated stirrer/condenser or sample preparation assembly generally designated **180.** Bearing plate apertures **162** (see Figure 8) are aligned with corresponding seal plate apertures **122** (see Figure 5). Corresponding motor mounting holes **128** and **164** and motor output bores **131** and **166** are also aligned. Shafts **152** of stir rods **150** are inserted through bearing plate apertures **162,** seal plate apertures **122,** mounting head bore **92** (see Figure 2) and condenser body interiors **65A** (see Figure 4). Paddles **154** are secured to shafts **152** below condenser units **65.** A motor **182** is installed by inserting appropriate fasteners **184** through motor mounting holes **128** and **164,** a spacer plate **186,** and a motor mounting flange **188.** An output shaft **182A** for motor **182** extends through output bores **131** and **166,** and output gear **175** is fitted thereon. A cover plate **191,** shown in Figure 11, protects the user from the rotating gears **171** and **175.**

Referring to Figure 12, both condenser and stirrer assemblies **115** and **155** (collectively, sample preparation assembly **180)** are illustrated in operative position at workstation **200.** A paddle speed controller and indicator unit **220** is wired to motor **182.** Disk springs **133** (shown in Figure 5) are interposed between bearing plate **160** and seal plate **120** and held down by bearing plate **160,** and act to force seal plate **120** downwardly into improved sealing relation with the mouths of each heater vessel **212.** Rotating seals **111** (shown in Figure 3), positioned in each mounting head bore **92,** prevent heated vapors in heater vessels **212** from escaping around stir rods **150** while allowing stir rods **150** to rotate freely. Vent tubes **105** (best shown in Figures 2 and 3) prevent an undue amount of pressure from building up inside heater vessels **212** by providing an escape route for vapors, since each vent tube **105** and its associated vent hole **101** are in open communication with corresponding mounting head bore **92,** condenser body interior **65A,** and the interior of heater vessel **212.** It should be noted however that under normal circumstances, the thermodynamic pressure-volume-temperature (P-V-T) relationship characterizing the condensing procedure dictates that no vapors will leak through vent tubes **105.** This is because condenser assembly **115** causes such vapors to change back to the liquid phase before the vapors have an opportunity to expand into vent tubes **105.**

It should also be noted that some procedures require that reactions occur in heater vessels **212** in the presence of an inert gas such as diatomic nitrogen or argon. In such cases, vent holes **101** can be used as gas inlets for admitting a quantity of inert gas into heater vessels **212,** and thus vent tubes **105** can be used as the fittings for these gas inlets. Accordingly, as used herein, the term "vent hole" can be taken to mean "gas inlet" and the term "vent tube" can be taken to mean "gas inlet fitting."

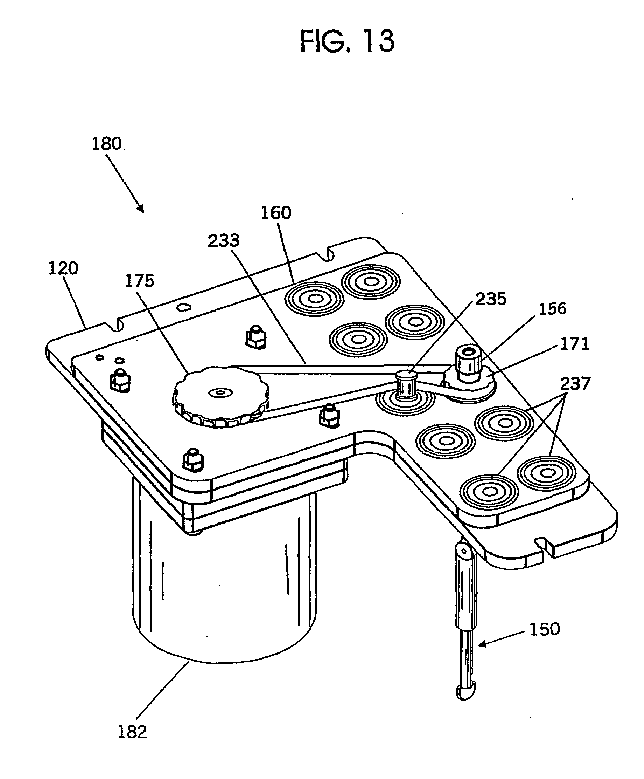

Referring to Figure 13, sample preparation assembly **180** can be adapted to operate in conjunction with less than a full array of heater vessels **212.** In such a case, a drive chain **233** of shorter length can be used and, depending on the number of condenser assemblies **115** and/or stirrer assemblies **155** being used and their positions at bearing plate **160,** one or more idler elements **235** can be installed at vacant bearing assembly sites **237.**

An exemplary general operation of the embodiments of the present invention will now be described with reference to Figure 12, with secondary reference made to Figure 1. The researcher places heater vessels **212** containing masses of drugs or the like into heater unit **210.** Stirrer assembly **155,** condenser assembly **115** or combined stirrer/condenser assembly **180** is picked up from a standby position and lowered over the array of heater vessels **212.** The position of stirrer/condenser assembly **180** is established by inserting mounting pins **218** into mounting brackets **214** and **216.** At predetermined time intervals, workstation **200** automatically drives liquid handling module **20** and inserts sampling needle **22** through the septum of each stir rod cap **156,** through corresponding stir rod **150** and into corresponding heater vessel **212.** Dilution module **30** transfers solvent into each heater vessel **212** to dilute the sampled mass therein to an appropriate volume, thereby producing a sample solution. Fluid flow to each operative condenser unit **65** of condenser assembly **115** is established by heat transfer fluid circulation system **140** (see Figure 6), motor **182** is switched on to drive each operative paddle **154** of stirrer assembly **155,** and heater unit **210** is switched on to heat the sample solutions. Paddle rotation speed can be adjusted by controller and indicator unit **220.**

At further predetermined time intervals, liquid handling module **20** can be programmed to insert sampling needle **22** back into each heater vessel **212** so that dilution module **30** can withdraw a metered quantity of heated sample solution from heater vessel **212.** Owing to the design of stirring assembly **155,** the sample extraction process can occur while paddles **154** are rotating. Liquid handling module **20** can then be used to deliver the sample solution to locations on rack assembly **205** or to a chemical analysis device as called for by the particular procedure.

It can be seen from the foregoing description that the design of each condenser unit **65** of condenser assembly **115,** whether or not forming a part of combined stirrer/condenser assembly **180,** is a significant improvement over previous condensing approaches. This is due in part to the fact that each condenser unit **65** generates a large amount of both conduction heat flux and convection heat flux away from the top portion of its associated heater vessel **212.** For the purpose of the present disclosure, heat flux can generally be defined as the amount of heat energy transferred per unit area per unit time. With respect to conduction, the relevant areas are those surface areas which are normal to the direction of temperature gradients and thus heat flow.

Referring back to Figures 2 - 5, condenser body **70** presents a large amount of surface area through which conductive heat transfer can occur, yet is compact enough to operate within heater vessel **212.** In the present case, conduction heat flux is a function of both the thermal conductivity of the material of condenser body **70** and the temperature gradients directed from the outer surfaces of condenser body **70** to the cooler boundaries of conduit **80** within condenser body **70.** Owing to the configuration of condenser body **80,** temperature gradients are dominant in directions radially inward from the outer surface of outer wall **78** of outer sleeve **76** toward conduit **80,** and in directions radially outward from the inner surface of inner wall **74** of inner tube **72.** The latter directions are perhaps most significant since most of the evaporative solvent will be traveling upwardly into condenser body interior **65A** defined by inner wall **74.** Because a heat transfer medium is constantly being circulated through conduit **80,** and because conduit **80** extends along a lengthy serpentine course, the entire solid portion of condenser body **70** is kept very cool. This results in large temperature gradients, which become the primary factor contributing to the large conduction heat flux. Because thermal conductivity is a less significant factor, a low-cost, moderately conductive material can be selected for condenser body **70.**

Large amounts of convective heat flux are observed at the boundaries between cooled condenser body **70** and the hot evaporative solvent flowing into condenser body interior **65A** and along the outer surface of condenser body **70.** In addition, the circulation of the heat transfer medium through conduit **80** establishes a strong forced convection which keeps the interfaces between condenser body **70** and conduit **80** cool. In the present case, the convection heat fluxes are a function of the temperature differences between the condenser body surfaces and the vaporous solvent, and between the fluid conduit surfaces and the heat transfer medium. The heat transfer coefficients established at these various boundaries are also a factor. These coefficients depend upon, among other things, the type of fluid flow (i.e., laminar or turbulent) and the geometry of condenser body **70** and conduit **80.** The length and shape of condenser body **70** and its corresponding large surface areas, the multi-pass flow arrangement of conduit **80,** and the continuous circulation of the heat transfer medium through conduit **80,** all result in a large average overall heat transfer coefficient.

Accordingly, the several heat transfer mechanisms established by condenser unit **65** enable a large amount of heat energy to be quickly dissipated from the solvent vapor and subsequently carried away by the heat transfer medium circulating through conduit **80.** The solvent vapor, upon striking the surfaces of condenser body **70** at a temperature below the saturation temperature of the solvent during normal pressures, will rapidly condense on those surfaces and be prevented from escaping out of heater vessel **212.** It should also be noted that the condensing function of condenser unit **65** is sufficiently localized within the top portion of heater vessel **212** so as not to impair the heating process performed by heater unit **210** on the sample solution contained in the lower portion of heater vessel **212.**

It will be understood that various details of the invention may be changed without departing from the scope of the invention as defined by the accompanying claims. Furthermore, the foregoing description is for the purpose of illustration only, and not for the purpose of limitation-the invention being defined by the claims.

## Claims

1. A sample preparation workstation comprising a condenser unit adapted to condense an evaporative substance in a container, the condenser unit comprising:
(a) an inner tube including an inner wall, the inner wall including opposing first and second ends;
(b) a hollow outer sleeve including an outer wall coaxially disposed around the inner wall, the outer wall including opposing first and second ends, wherein the inner tube and the outer sleeve cooperatively define a sealed condenser body and the second end of the inner wall defines an aperture of the condenser body; and
(c) a fluid conduit interposed between the inner tube and the outer sleeve and including an inlet end and an outlet end, wherein a first portion of the fluid conduit extends along an axial length of the condenser body and a second portion of the fluid conduit extends along a circumferential length of the condenser body, wherein the fluid conduit is defined by a groove.

2. The sample preparation workstation according to claim 1 wherein the inlet and outlet ends are each disposed proximate to the respective first ends of the inner tube and the outer sleeve.

3. The sample preparation workstation according to claim 1 wherein the respective first ends of the inner and outer walls are sealed together and the respective second ends of the inner and outer walls are sealed together.

4. The sample preparation workstation according to claim 1 wherein the groove is formed on the inner wall, and the groove and the outer wall cooperatively define the fluid conduit.

5. The sample preparation workstation according to claim 1 wherein the groove is formed on the outer wall, and the groove and the outer wall cooperatively define the fluid conduit.

6. The sample preparation workstation according to claim 1 comprising a mounting head attached to the condenser body proximate to the respective first ends of the inner and outer walls.

7. The sample preparation workstation according to claim 6 comprising a seal plate attached to the mounting head.

8. The sample preparation workstation according to claim 6 comprising an inlet fitting and an outlet fitting, the inlet fitting attached to the mounting head in fluid communication with the inlet end of the fluid conduit and the outlet fitting attached to the mounting head in fluid communication with the outlet end of the fluid conduit.

9. The sample preparation workstation according to claim 6 wherein the inner wall defines an interior of the condenser body and the mounting head includes an interior bore disposed in open communication with the condenser body interior.

10. The sample preparation workstation according to claim 9 wherein the mounting head includes an outside surface and a vent passage disposed in open communication between the outside surface and the interior bore.

11. The sample preparation workstation according to claim 1 comprising a seal plate mounted to the condenser body.

12. The sample preparation workstation according to claim 1 comprising a fin disposed on the condenser body.

13. The sample preparation workstation according to claim 1 further comprising a stir rod extending through the condenser interior and beyond the respective second ends of the inner wall and the outer wall.

14. The sample preparation workstation according to claim 13 wherein the stir rod includes a shaft and an agitator element attached to the end of the shaft.

15. The sample preparation workstation according to claim 14 wherein the stir rod and the agitator element include respective hollow regions cooperatively defining an elongate bore.

16. The sample preparation workstation according to claim 15 wherein the stir rod has an elongate bore.

17. The sample preparation workstation according to claim 16 wherein the stir rod includes opposing first and second ends, a septum is mounted to the first stir rod end, and the second stir rod end is disposed below the condenser body.

18. The sample preparation workstation according to claim 13 further comprising a bearing plate including a bearing plate aperture, wherein the stir rod is rotatably mounted through the bearing plate aperture.

19. The sample preparation workstation according to claim 18 comprising a seal plate mounted over the respective first ends of the inner and outer walls.

20. The sample preparation workstation according to claim 19 comprising a bearing plate including a bearing plate aperture, wherein the seal plate includes a seal plate aperture and the stir rod extends through the bearing plate aperture and the seal plate aperture.

21. The sample preparation workstation according to claim 20 comprising a biasing member, wherein the bearing plate is disposed above the seal plate and the biasing member is interposed between the bearing plate and the seal plate and is adapted to bias the seal plate downwardly.

22. The sample preparation workstation comprising a plurality of condenser units according to any of claims 1 to 21.

23. A method for preventing the escape of vaporous phases of a substance from a container comprising the steps of:
(a) providing a condenser unit including an inner tube, an outer sleeve coaxially disposed around the inner tube, and a fluid conduit interposed between the inner tube and the outer sleeve, wherein a first portion of the fluid conduit extends along an axial length of the condenser body and a second portion of the fluid conduit extends along a circumferential length of the condenser body, and wherein the fluid conduit is defined by a groove;
(b) bringing a vessel containing a substance into sealed contact with the condenser unit such that the fluid conduit extends into the vessel; and
(c) circulating a heat transfer medium through the fluid conduit to cause a vaporous portion of the substance to condense.

## Patentansprüche

1. Probevorbereitungs-Arbeitsstation mit einer Kondensatoreinheit, durch die eine Verdampfungssubstanz in einem Behälter kondensierbar ist, wobei die Kondensatoreinheit aufweist:
a) ein inneres Rohr mit einer Innenwand, wobei die Innenwand erste und zweite gegenüberliegende Enden aufweist;
b) eine hohle äußere Hülse mit einer Außenwand, die koaxial um die Innenwand angeordnet ist, wobei die Außenwand erste und zweite gegenüberliegende Enden aufweist, wobei das innere Rohr und die äußere Hülse gemeinsam einen dichten Kondensatorkörper definieren, und das zweite Ende der Innenwand eine Öffnung des Kondensatorkörpers definiert; und
c) einen Fluidkanal, der zwischen dem inneren Rohr und der äußeren Hülse angeordnet ist, und ein Einlassende und ein Auslassende aufweist, wobei sich ein erster Abschnitt des Fluidkanals entlang einer axialen Länge des Kondensatorkörpers erstreckt, und sich ein zweiter Abschnitt des Fluidkanals entlang einer Umfangslänge des Kondensatorkörpers erstreckt, wobei der Fluidkanal durch eine Nut definiert ist.

2. Probevorbereitungs-Arbeitsstation nach Anspruch 1, bei der jedes der Einlass- und Auslassenden nahe dem ersten Ende des inneren Rohrs beziehungsweise der äußeren Hülse angeordnet ist.

3. Probevorbereitungs-Arbeitsstation nach Anspruch 1, bei der die jeweiligen ersten Enden der Innen- und Außenwände zusammen gedichtet sind, und die jeweiligen zweiten Enden der Innen- und Außenwände zusammen gedichtet sind.

4. Probevorbereitungs-Arbeitsstation nach Anspruch 1, bei der die Nut an der Innenwand ausgebildet ist, und die Nut und die Außenwand gemeinsam den Fluidkanal definieren.

5. Probevorbereitungs-Arbeitsstation nach Anspruch 1, bei der die Nut an der Außenwand ausgebildet ist, und die Nut und die Außenwand gemeinsam den Fluidkanal definieren.

6. Probevorbereitungs-Arbeitsstation nach Anspruch 1, mit einem Befestigungskopf, der an dem Kondensatorkörper nahe den jeweiligen ersten Enden der Innen- und Außenwände angebracht ist.

7. Probevorbereitungs-Arbeitsstation nach Anspruch 6, mit einer Dichtungsplatte, die an dem Befestigungskopf angebracht ist.

8. Probevorbereitungs-Arbeitsstation nach Anspruch 6, mit einem Einlass-Anschlussstitck und einem Auslass-Anschlussstück, wobei das Einlass-Anschlussstück an dem Befestigungskopf in Fluid-Verbindung mit dem Einlassende des Fluidkanals angebracht ist, und das Auslass-Anschlussstück an dem Befestigungskopf in Fluid-Verbindung mit dem Auslassende des Fluidkanals angebracht ist.

9. Probevorbereitungs-Arbeitsstation nach Anspruch 6, bei der die Innenwand ein Inneres des Kvndensatorkörpers definiert, und der Befestigungskopf eine Innenbohrung umfasst, die in offener Kommunikation mit dem Kondensatorkörperinneren angeordnet ist.

10. Probevorbereitungs-Arbeitsstation nach Anspruch 9, bei welcher der Befestigungskopf eine Außenseitenoberfläche und einen Lüftungsdurchgang umfasst, der in offener Kommunikation zwischen der Außenseitenoberfläche und der Innenbohrung angeordnet ist.

11. Probevorbereitungs-Arbeitsstation nach Anspruch 1, mit einer Dichtungsplatte, die an dem Kondensatorkörper angebracht ist.

12. Probevorbereitungs-Arbeitsstation nach Anspruch 1, mit einer Rippe, die an dem Kondensatorkörper angebracht ist.

13. Probevvrbereitungs-Arbeitsstation nach Anspruch 1, ferner mit einem Rührstab, der sich durch das Kondensatorinnere, und hinter die jeweiligen zweiten Enden der Innenwand und der Außenwand, erstreckt.

14. Probevorbereitungs-Arbeitsstation nach Anspruch 13, bei welcher der Rührstab einen Schaft und ein Rührelement aufweist, das an dem Ende des Schafts angebracht ist.

15. Probevorbereitungs-Arbeitsstation nach Anspruch 14, bei dem der Rührstab und das Rührelement jeweilige hohle Bereiche umfassen, die gemeinsam eine längliche Bohrung definieren.

16. Probevorbereitungs-Arbeitsstation nach Anspruch 15, bei dem der Rührstab eine längliche Bohrung aufweist.

17. Probevorbereitungs-Arbeitsstation nach Anspruch 16, bei dem der Rührstab gegenüberliegende erste und zweite Enden umfasst, ein Septum an dem ersten Rührstabende angebracht ist, und das zweite Rührstabende unter dem Kondensatorkörper angeordnet ist.

18. Probevorbereitungs-Arbeitsstation nach Anspruch 13, ferner mit einer Lagerplatte, die eine Lagerplattenöffnung aufweist, wobei der Rührstab durch die Lagerplattenöffnung drehbar angebracht ist.

19. Probevorbereitungs-Arbeitsstation nach Anspruch 18, mit einer Dichtungsplatte, die über den jeweiligen ersten Enden der Innen- und Außenwände angebracht ist.

20. Probevorbereitungs-Arbeitsstation nach Anspruch 19, mit einer Lagerplatte, die eine Lagerplattenöffnung aufweist, wobei die Dichtungsplatte eine Dichtungsplattenöffnung aufweist, und sich der Rührstab durch die Lagerplattenöffnung und die Dichtungsplattenöffnung erstreckt.

21. Probevorbereitungs-Arbeitsstation nach Anspruch 20, mit einem Vorspannelement, wobei die Lagerplatte über der Dichtungsplatte angeordnet ist, und das Vorspannelement zwischen der Lagerplatte und der Dichtungsplatte angeordnet ist, und durch das Vorspannelement die Dichtungsplatte nach unten vorspannbar ist.

22. Probevorbereiturlgs-Arbeitsstation mit einer Vielzahl von Kondensatoreneinheiten nach einem der Ansprüche 1 bis 21.

23. Verfahren zur Verhinderung des Entweichens von dampfförmigen Phasen einer Substanz aus einem Behälter, die folgenden Schritte umfassend:
a) Vorsehen einer Kondensatoreinheit mit einem inneren Rohr, einer äußeren Hülse, die koaxial um das innere Rohr angeordnet ist, und einem Fluidkanal, der zwischen dem inneren Rohr und der äußeren Hülse angeordnet ist, wobei sich ein erster Abschnitt des Fluidkanals entlang einer axialen Länge des Kondensatorkörpers erstreckt, und sich ein zweiter Abschnitt des Fluidkanals entlang einer Umfangslänge des Kondensatorkörpers erstreckt, und wobei der Fluidkanal durch eine Nut definiert ist;
b) in einen gedichteten Kontakt Bringen eines eine Substanz enthaltenden Gefäßes mit der Kondensatoreinheit, derart, dass sich der Fluidkanal in das Gefäß erstreckt; und
c) Zirkulieren eines Wärmeübertragungsmediums durch den Fluidkanal, um zu bewirken, dass ein dampfförmiger Teil der Substanz kondensiert.

## Revendications

1. Poste de préparation d'échantillons, comprenant une unité condenseur adaptée pour condenser une substance volatile contenue dans un récipient, l'unité condenseur comprenant :
(a) un tube intérieur comprenant une paroi interne, la paroi interne comprenant une première et une seconde extrémités opposées ;
(b) une enveloppe extérieure creuse comprenant une paroi externe disposée de façon coaxiale autour de la paroi interne, la paroi externe comprenant une première et une seconde extrémités opposées, dans laquelle le tube interne et l'enveloppe extérieure définissent ensemble un corps de condenseur scellé et la seconde extrémité de la paroi interne définit une ouverture dans le corps du condenseur ; et
(c) une conduite de fluide interposée entre le tube externe et l'enveloppe extérieure et comprenant une extrémité d'entrée et une extrémité de sortie, dans laquelle une première partie de la conduite de fluide s'étend sur la longueur axiale du corps de condenseur et une seconde partie de la conduite de fluide s'étend le long d'une longueur circonférentielle du corps de condenseur, dans laquelle la conduite de fluide est définie par une gorge.

2. Poste de préparation d'échantillons selon la revendication 1, dans lequel les extrémités d'entrée et de sortie sont chacune disposées à proximité respectivement des première et seconde extrémités du tube interne et de l'enveloppe extérieure.

3. Poste de préparation d'échantillons selon la revendication 1, dans lequel les premières extrémités respectives des parois interne et externe sont assemblées de façon étanche et les secondes extrémités respectives des parois interne et externe sont assemblées de façon étanche.

4. Poste de préparation d'échantillons selon la revendication 1, dans lequel la gorge est formée sur la paroi interne, et la gorge et la paroi externe définissent ensemble la conduite de fluide.

5. Poste de préparation d'échantillons selon la revendication 1, dans lequel la gorge est formée sur la paroi externe, et la gorge et la paroi externe définissent ensemble la conduite de fluide.

6. Poste de préparation d'échantillons selon la revendication 1, comprenant une tête de montage fixée sur le corps de condenseur, à proximité respectivement des premières extrémités de parois interne et externe.

7. Poste de préparation d'échantillons selon la revendication 6, comprenant une plaque d'étanchéité fixée sur la tête de montage.

8. Poste de préparation d'échantillons selon la revendication 6, comprenant un raccord d'entrée et un raccord de sortie, le raccord d'entrée étant fixé sur la tête de montage, en communication fluide avec l'extrémité d'entrée de la conduite de fluide, et le raccord de sortie étant fixé sur la tête de montage, en communication fluide avec l'extrémité de sortie de la conduite de fluide.

9. Poste de préparation d'échantillons selon la revendication 6, dans lequel la paroi interne définit l'intérieur du corps de condenseur et la tête de montage comprend un alésage interne disposé en communication ouverte avec l'intérieur du corps de condenseur.

10. Poste de préparation d'échantillons selon la revendication 9, dans lequel la tête de montage comprend une surface externe et un passage d'évent disposé en communication ouverte entre la surface externe et l'alésage interne.

11. Poste de préparation d'échantillons selon la revendication 1, comprenant une plaque d'étanchéité fixée sur le corps de condenseur.

12. Poste de préparation d'échantillons selon la revendication 1, comprenant une ailette disposée sur le corps de condensateur.

13. Poste de préparation d'échantillons selon la revendication 1, comprenant en outre une tige d'agitation s'étendant au travers de l'intérieur du condenseur et au-delà des secondes extrémités respectives de la paroi interne et de la paroi externe.

14. Poste de préparation d'échantillons selon la revendication 13, dans lequel la tige d'agitation comprend un arbre et un élément agitateur fixé à l'extrémité de l'arbre ;

15. Poste de préparation d'échantillons selon la revendication 14, dans lequel la tige d'agitation et l'élément d'agitation comprennent des parties creuses définissant ensemble un alésage de forme allongée.

16. Poste de préparation d'échantillons selon la revendication 15, dans lequel la tige d'agitation comporte un alésage allongé.

17. Poste de préparation d'échantillons selon la revendication 16, dans lequel la tige d'agitation comprend une première et seconde extrémités opposées, un septum étant fixé sur la première extrémité de la tige d'agitation et la seconde extrémité de tige d'agitation étant disposée au-dessous du corps de condenseur.

18. Poste de préparation d'échantillons selon la revendication 13, comprenant en outre une plaque support comprenant une ouverture de plaque support, dans laquelle la tige d'agitation est montée en rotation au travers de l'ouverture de la plaque support.

19. Poste de préparation d'échantillons selon la revendication 18, comprenant une plaque d'étanchéité montée sur les premières extrémités respectives des parois interne et externe.

20. Poste de préparation d'échantillons selon la revendication 19, comprenant une plaque support comportant une ouverture de plaque support, dans laquelle la plaque d'étanchéité comprend une ouverture de plaque d'étanchéité et la tige d'agitation s'étend au travers de l'ouverture de plaque support et l'ouverture de la plaque d'étanchéité.

21. Poste de préparation d'échantillons selon la revendication 20, comprenant un élément d'inclinaison, dans lequel la plaque support est disposée au-dessus de la plaque d'étanchéité et l'élément d'inclinaison est interposé entre la plaque support et la plaque d'étanchéité et adapté de façon à incliner la plaque d'étanchéité vers le bas.

22. Poste de préparation d'échantillons comprenant une pluralité d'unités condenseurs, selon l'une quelconque des revendications 1 à 21.

23. Procédé pour éviter que des vapeurs d'une substance ne s'échappent d'un récipient, comportant les étapes consistant à :
(a) fournir une unité condenseur comprenant un tube intérieur, une enveloppe extérieure disposée de façon coaxiale autour du tube intérieur, et une conduite de fluide interposée entre le tube intérieur et l'enveloppe extérieure, dans lequel une première partie de la conduite de fluide s'étend sur la longueur axiale du corps de condenseur et une seconde partie de la conduite de fluide s'étend sur une longueur circonférentielle du corps de condenseur, dans lequel la conduite de fluide est définie par une gorge ;
(b) amener un flacon contenant une substance en contact étanche avec l'unité condenseur, de sorte que la conduite de fluide s'étend dans le flacon ; et
(c) faire circuler un milieu à transfert thermique dans la conduite afin de provoquer la condensation de la partie volatile de la substance.
